# FASCICULE DE BREVET EUROPEEN

(11) **EP 2 230 115 B1**
(45) Date de publication et mention de la délivrance du brevet: **28.12.2011**
(21) Numéro de dépôt: 09155291.9
(22) Date de dépôt: 16.03.2009
(51) Int. Cl.: B60J 7/00

(54) **Dispositif d'occultation d'un pavillon vitre d'un vehicule automobile, et vehicule automobile correspondant**
Abdeckungsvorrichtung für ein Glasdach eines Kraftfahrzeugs und entsprechendes Kraftfahrzeug
Device for concealing a glazed roof of an automobile, and corresponding vehicle.

(43) Date de publication de la demande: 22.09.2010
(73) Titulaire: Advanced Comfort Systems France SAS - ACS France, 79300 Bressuire (FR)
(72) Inventeur: Thibaudeau, Daniel, 79300, TERVES (FR); Rolland, Norbert, 49300, CHOLET (FR); Bonnin, Arnaud, 79300, BRESSUIRE (FR)
(74) Mandataire: Bioret, Ludovic

(56) Documents cités:
- EP-A- 1 747 926
- DE-A1- 10 360 629
- DE-A1-102005 013 643
- US-A1- 2004 160 082

## Description

### 1. Domaine de l'invention

Le domaine de l'invention est celui des véhicules automobiles, et plus particulièrement de l'occultation de surfaces vitrées correspondant à un pavillon vitré et/ou à la partie supérieure d'un pare-brise se prolongeant vers le pavillon du véhicule.

### 2. Etat de la Technique

Les surfaces vitrées, et en particulier les pavillons vitrés, qui, lorsqu'ils ne font qu'un, au moins visuellement, avec le pare-brise (absence d'un élément de carrosserie extérieur entre les deux) sont aussi appelés « pare-brises panoramiques », sont de plus en plus développées dans les véhicules automobiles. Elles confèrent un confort et une impression d'espace, ainsi qu'une meilleure visibilité, et plus généralement offrent une amélioration esthétique générale du véhicule.

Cependant, dans certains cas, notamment quand le soleil est fort, il est souhaitable de pouvoir occulter au moins en partie ces surfaces vitrées. Pour cela, on a développé plusieurs techniques. La plus connue consiste à utiliser un velum, c'est-à-dire une plaque rigide, qui peut être ramené en position déployée en regard de la zone à occulter, et rangé en position repliée dans un logement prévu à cet effet dans la garniture intérieure du véhicule.

Cette approche, assez simple techniquement, présentant cependant des inconvénients en termes d'encombrement, notamment lorsque le dispositif est en position repliée.

On a également pensé à mettre en oeuvre un ou plusieurs stores à enrouleur, actionnables manuellement ou de façon motorisée, ce qui permet de surmonter certains des inconvénients précédents.

Classiquement, des rails sont montés de chaque côté du pavillon, le long des longerons, pour guider les bords latéraux du velum ou de la toile du store lors de son repli/déploiement.

Ces rails, qui épousent les contours du pavillon du véhicule, sont généralement non parallèles. En effet, les pavillons des véhicules actuels présentent habituellement un élargissement au niveau de l'avant du véhicule, ce qui impose d'éloigner progressivement les rails l'un de l'autre lorsqu'on se rapproche de l'avant du véhicule.

Pour éviter l'apparition de jours inesthétiques entre le pavillon et les bords de l'élément d'occultation (vélum ou toile d'un store), guidé dans les rails, on a proposé d'ajouter des volets latéraux rigides de part et d'autre de cet élément central, à proximité de son extrémité avant. Un exemple de mise en oeuvre d'une telle technique, dans laquelle les volets sont montés pivotant par rapport à une traverse située à proximité de l'avant de l'élément d'occultation, est, par exemple, décrit dans le document DE-A-103 60 629.

Un inconvénient de ces techniques connues est qu'il faut prévoir un mécanisme d'actionnement complexe pour déployer les volets, notamment du fait qu'un déplacement synchrone des deux volets est souhaitable.

D'autre part, sur le plan esthétique, ces techniques ne permettent pas d'obtenir, vu de l'intérieur et/ou de l'extérieur, un aspect lisse et uniforme pour l'ensemble de la surface d'occultation. En effet, les volets ne sont généralement pas dans le même plan que le vélum ou la toile, et laissent en conséquence apparaître un décrochement inesthétique.

En outre, dans certains cas, les volets pivotant latéraux rigides sont pesants et encombrants. Il est donc nécessaire de prévoir une traverse portant ces volets de section adaptée et un espace pour loger ces volets, dimensionné en conséquence, ce qui réduit le volume disponible à l'intérieur du véhicule.

Ces techniques ont de plus un coût de revient élevé et posent classiquement des problèmes de rattrapage résultant des tolérances dimensionnelles, pouvant atteindre plusieurs millimètres, admises sur la position des rails. Le montage sur le véhicule et la maintenance sont également complexes. Elles imposent en outre des contraintes sur le plan de l'ergonomie.

### 3. Objectifs de l'invention

L'invention a notamment pour objectif de pallier ces inconvénients de l'art antérieur.

Plus précisément, un objectif de l'invention est de fournir une technique d'occultation d'une surface vitrée correspondant à un pavillon vitré et/ou à la partie supérieure d'un pare-brise, qui assure une occultation efficace lorsque la surface à occulter n'est pas rectangulaire.

L'invention a également pour objectif de fournir une telle technique, qui soit adaptée à l'esthétique et à l'ergonomie des véhicules à pavillon vitré présentant une surface vitrée continue entre le pare-brise et le pavillon. Notamment, un objectif, selon au moins un mode de réalisation particulier de l'invention, est de fournir une telle technique d'occultation qui présente un aspect sensiblement uniforme et sans rupture visible (ou avec une rupture peu visible) vu de l'intérieur et/ou de l'extérieur du véhicule, en toute position déployée.

Un autre objectif de l'invention, selon au moins un mode de réalisation, est de fournir une telle technique, qui soit simple à utiliser et à mettre en oeuvre.

Encore un objectif de l'invention, selon au moins un mode de réalisation, est de fournir une telle technique, qui ne nécessite pas de moyens complexes, et qui soit peu coûteuse.

L'invention a aussi pour objectif, selon au moins un mode de réalisation, de fournir une telle technique, qui permette de compenser simplement et efficacement d'éventuels jeux de fabrication ou de montage.

### 4. Exposé de l'invention

Ces objectifs, ainsi que d'autres qui apparaîtront par la suite, sont atteints à l'aide d'un dispositif d'occultation d'un pavillon vitré et/ou d'une partie supérieure d'un pare-brise d'un véhicule automobile, comprenant au moins un élément central d'occultation mobile guidé le long de deux rails de guidage non parallèles entre au moins deux positions, une position repliée et une position déployée.

Selon l'invention, un tel dispositif d'occultation comprend au moins un élément latéral d'occultation souple monté entre ledit élément central et un desdits rails, susceptible d'être enroulé et monté de façon à pouvoir prendre au moins deux positions :
- une position déroulée, dans laquelle il s'étend sensiblement entre le rail et ledit élément central d'occultation, lorsque celui-ci est dans la position déployée ;
- une position enroulée, à l'intérieur ou au voisinage dudit rail, lorsque ledit élément central d'occultation est dans la position repliée.

L'invention propose donc, de façon inédite, de mettre en oeuvre, sur un des bords et préférentiellement sur chacun des bords de l'élément central, un élément d'occultation latéral souple pour combler efficacement l'espace non couvert par l'élément central apparaissant sur ce bord entre l'élément central et le rail incurvé. En outre cet élément souple s'enroulant dans ou au voisinage du rail, la solution proposée par l'invention pour s'adapter à une surface d'occultation latérale variable, se révèle d'une mise en oeuvre particulièrement simple et peu encombrante.

Par ailleurs, il est possible, selon un mode de réalisation avantageux, d'obtenir sans difficulté excessive que cet élément latéral s'étende avantageusement dans la continuité de l'épaisseur de l'élément central, en procédant à un choix dimensionnel adéquat, ce qui est particulièrement satisfaisant sur un plan esthétique.

Dans au moins un mode de réalisation de l'invention, ledit élément central d'occultation est sensiblement rectangulaire, et le dispositif d'occultation selon l'invention comprend deux éléments latéraux sensiblement triangulaires.

Selon un premier mode de réalisation particulièrement avantageux de l'invention, chaque élément latéral est monté sur un tube enrouleur souple.

En prévoyant un tube enrouleur souple, celui-ci peut notamment être guidé le long du rail en épousant le profil et/ou selon le cas l'évolution du profil du rail.

De façon préférentielle, ledit tube enrouleur souple est guidé et/ou entraîné parallèlement à l'un desdits rails par un câble.

Le déplacement de ce câble peut, par exemple, être commandé par un moteur.

Avantageusement, ledit câble porte un ressort de compensation de la longueur dudit tube selon l'axe de déplacement dudit élément central.

Ainsi, on compense la longueur projetée du tube dans la direction de déplacement du véhicule lorsque le tube s'incline en suivant la courbure du rail.

Selon un aspect avantageux de l'invention, ledit élément latéral souple est solidarisé audit tube enrouleur uniquement par son extrémité la plus proche de l'avant du véhicule.

Ainsi, on réduit le risque que des plis se forment sur la portion de toile déployée.

De façon avantageuse, ledit tube enrouleur est lié en translation au rail à l'aide d'au moins deux patins.

Préférentiellement, ledit rail comprend un logement apte à recevoir et/ou à guider ledit tube enrouleur.

Du fait de cet agencement compact, le tube enrouleur n'empiètement pas sur le volume utile de l'habitacle du véhicule.

De façon préférentielle, au moins un desdits rails présente un logement profilé de façon à permettre l'enroulement dudit élément latéral dans ledit logement, lorsque l'on passe de la position déroulée à la position enroulée.

Ainsi, on réduit l'encombrement et l'aspect visuel du raccordement aux rails est amélioré.

Selon un autre mode de réalisation avantageux de l'invention, ledit élément latéral porte ou coopère avec des moyens de rappel, tendant à le ramener dans la position enroulée.

On dispose ainsi d'une solution simple et économique.

De façon préférentielle, lesdits moyens de rappel comprennent au moins une lame ressort solidarisée audit élément latéral.

Une telle lame ressort permet ainsi de porter l'élément latéral et assure tout à la fois l'enroulement de cet élément.

Avantageusement, ledit élément central appartient au groupe comprenant les vélums et les toiles montées sur un tube enrouleur.

L'invention n'est donc pas limitée dans son utilisation au choix de l'un ou l'autre de ces éléments d'occultation centraux.

Préférentiellement, le ou lesdits éléments latéraux sont réalisés dans ou recouverts par un tissu similaire à celui dans lequel est réalisé ou dont est recouvert l'élément central.

Ainsi, l'ensemble de la surface d'occultation présente un aspect homogène.

L'invention concerne également un véhicule automobile équipé d'un dispositif d'occultation conforme à l'un de ceux décrits ci-dessus.

### 5. Liste des figures

D'autres caractéristiques et avantages de l'invention apparaîtront plus clairement à la lecture de la description suivante de deux modes de réalisation préférentiels de l'invention, donnés à titre de simples exemples illustratifs et non limitatifs, et des dessins annexés parmi lesquels :
- la figure 1A et 1B présentent un véhicule selon l'invention, lorsque l'élément central d'occultation est replié et déployé respectivement ;
- les figures 2A et 2B sont des vues de détail d'un élément latéral d'occultation du dispositif d'occultation présenté en relation avec les figures 1A et 1B, respectivement dans une position déroulée intermédiaire et dans une position totalement déroulée;
- la figure 3 est une vue de détail de ce même élément latéral d'occultation dans la position enroulée ;
- la figure 4 est une vue en coupe du rail au niveau du tube enrouleur de l'élément latéral d'occultation présenté par les figures 2 et 3 ;
- la figure 5 est une vue en coupe de la jonction entre l'élément central et un élément latéral de l'élément du dispositif d'occultation présenté sur les figures précédentes;
- la figure 6 illustre un deuxième mode de réalisation de l'invention ;
- les figures 7 et 8 sont des représentations en coupe verticale de ce deuxième mode de réalisation de l'invention, respectivement en position déroulée et enroulée de l'élément latéral d'occultation.

### 6. Description détaillée d'un mode de réalisation de l'invention

### 6.1. Rappels

L'invention s'applique donc aux véhicules pour lesquels les rails de guidage de l'élément central ne sont pas parallèles, et s'éloignent l'un de l'autre en allant vers l'avant du véhicule.

Comme déjà mentionné, le principe général de l'invention repose sur la mise en oeuvre de dispositifs d'occultation (velum ou toile(s) d'occultation) de pavillon et/ou de partie supérieure de pare-brise présentant des éléments latéraux souples et susceptibles de s'enrouler, permettant d'occulter la zone non couverte par l'élément d'occultation central.

Ces éléments latéraux souples permettent notamment de réduire ou supprimer, sinon l'absence d'uniformité de la surface d'occultation, du moins l'impression visuelle de rupture de niveau et/ou d'aspect à proximité des bords, constatée avec les techniques de l'art antérieur.

### 6.2. Premier exemple de mode de réalisation

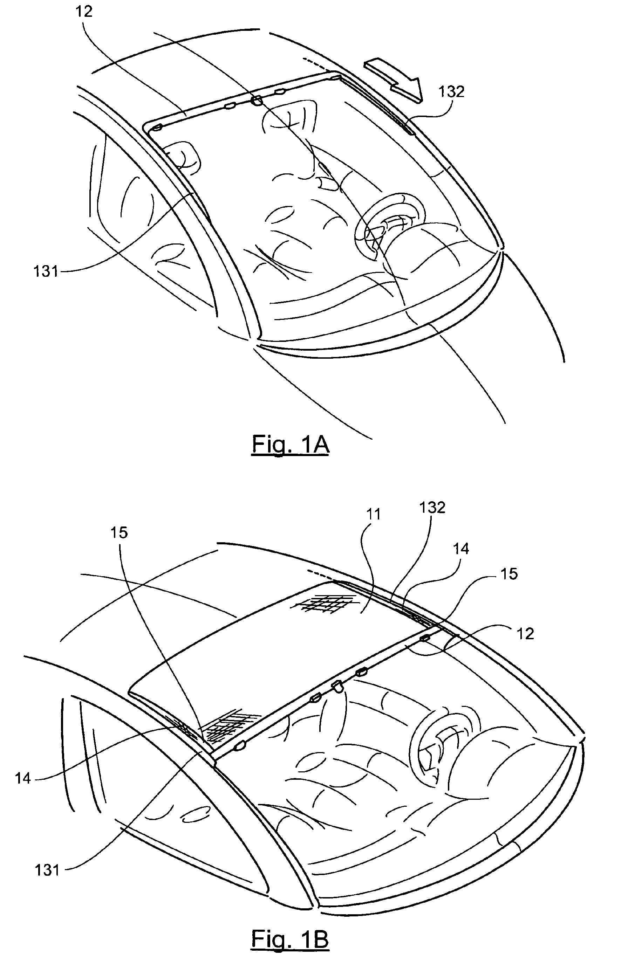

Les figures 1A et 1B illustrent un mode de réalisation de l'invention, dans lequel l'élément d'occultation central 11 est une toile sensiblement rectangulaire montée sur un tube enrouleur (non représenté), et entraînée par une barre de tirage 12 guidée à chacune de ses extrémités dans des rails 131 et 132 non parallèles. L'élément d'occultation peut également être un velum dans une variante.

Dans la position de la figure 1A, la toile 11 est repliée et la barre de tirage 12 affleure avec la portion de carrosserie du pavillon.

Ainsi que cela apparaît sur la figure 1B, lorsque la toile 11 est déployée, un espace 14 au voisinage de chaque rail 131, 132 n'est pas occulté par cette toile centrale. C'est pourquoi, un élément latéral d'occultation souple 15, susceptible de s'étendre entre l'élément d'occultation central et le rail le plus proche, a été proposé par les inventeurs pour occulter cet espace 14 de chaque côté de la toile 11, et donc garantir une bonne occultation globale.

Dans le mode de réalisation de l'invention illustré par les figures 1A et 1B, l'élément latéral d'occultation souple 15 est mis en oeuvre sous la forme d'un store à enrouleur 21.

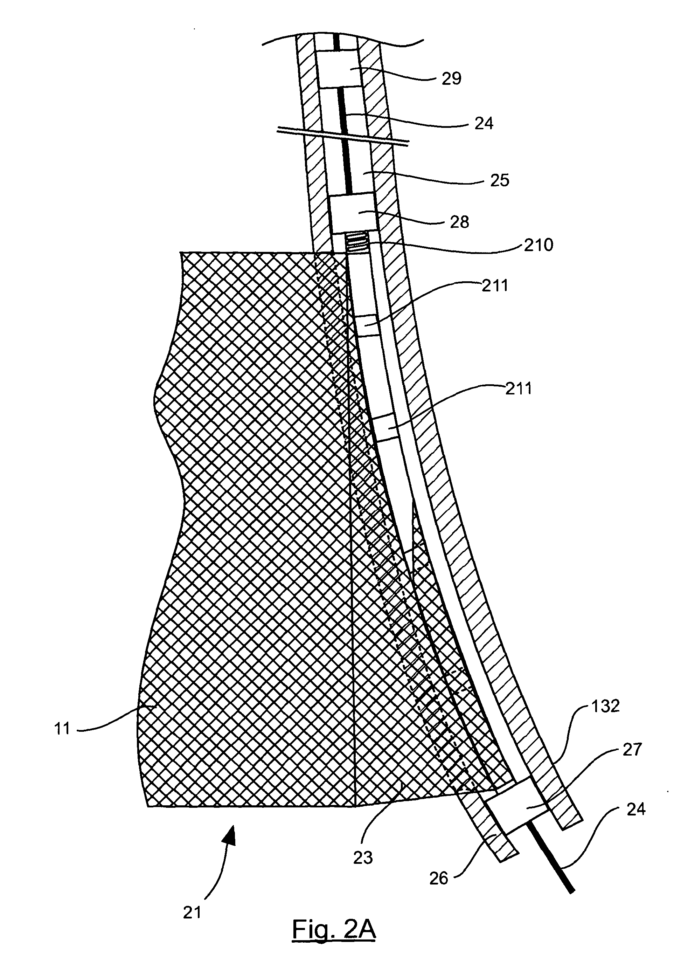

La figure 2A est une vue détaillée de ce store 21 en position déroulée intermédiaire, lorsque le dispositif d'occultation selon l'invention est dans la position déployée représentée par la figure 1B.

Le store 21 présente un tube enrouleur 22 souple (par exemple un tube en plastique souple, un tube annelé de forme similaire à une gaine électrique, un ressort hélicoïdal à spires jointives, un tube formé de plusieurs éléments mobiles les uns par rapport aux autres,...) logé dans une glissière de guidage et de réception 25 formée dans le rail 132, autour duquel une portion de la toile est enroulée dans cette position déroulée intermédiaire. Une rainure 26 dans le rail 132, débouchant sur la glissière 25, permet de laisser passer la toile 23 de ce store 21.

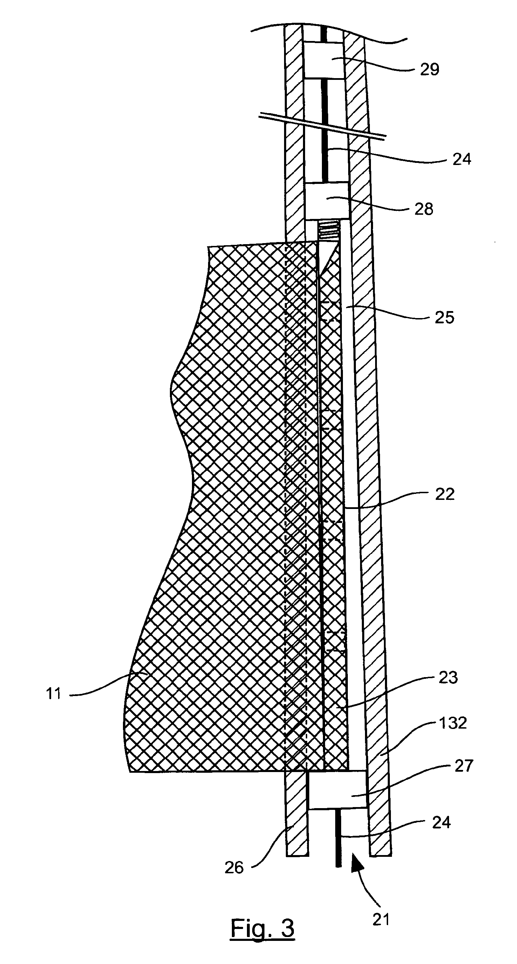

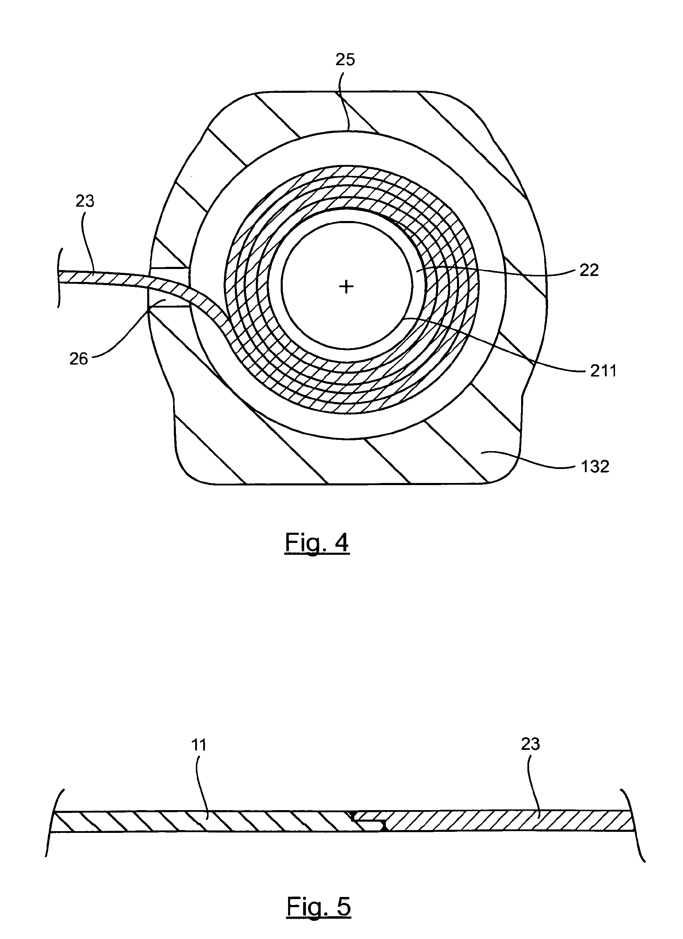

Comme on peut le voir sur la figure 4, dans une vue en coupe, la glissière 25 présente une section et un profil adaptés pour permettre l'enroulement de la toile 23 dans ce logement, lorsque l'on passe d'une position déroulée à la position enroulée (représentée sur la figure 3), où l'élément central d'occultation est dans la position repliée.

Un ressort de rappel (non représenté) agissant sur le tube enrouleur 22 maintient la toile 23 tendue entre le rail 132 et l'élément central 11.

Il peut également être envisagé, dans des variantes de ce mode de réalisation, de monter le tube 22 à l'extérieur du rail, parallèlement à ce dernier.

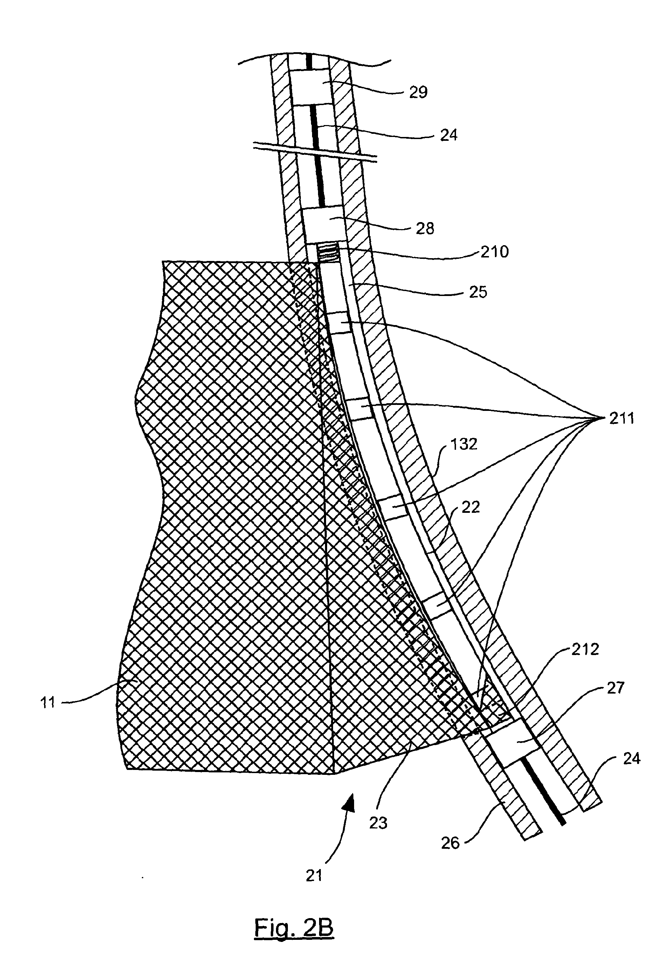

La toile 23 est de forme sensiblement triangulaire. Son bord intérieur est fixé par des micro-soudures à un côté de l'élément central 11. Son bord extérieur n'est en revanche, dans ce mode de réalisation, fixé au tube enrouleur 22 que par son extrémité 212 la plus proche de l'avant du véhicule, comme il apparaît plus clairement sur la figure 2B, qui présente l'élément latéral d'occultation en position totalement déroulée.

Comme on peut le voir sur la figure 5, dans une vue en coupe de la jonction entre la toile 23 et l'élément d'occultation central 11, on ne constate pas de déport vertical, au moins visuellement, entre la surface inférieure de l'élément central 11 et celle de la toile 23, ce qui est satisfaisant sur le plan esthétique.

Dans des variantes de ce mode de réalisation, il peut également être prévu de réunir l'extrémité de la toile 23 à l'élément central, par tout procédé adapté connu, par exemple par collage, par scellement à chaud, par couture, par agrafage ...

Le tube enrouleur 22 peut être cylindrique ou présenter, comme dans le mode de réalisation illustré, un profil légèrement conique permettant d'améliorer l'enroulement de la toile sensiblement triangulaire 23.

Un câble 24 d'entraînement, actionnable par un moteur (non représenté), est fixé à l'extrémité arrière du tube 22. Ce câble 24 est logé dans la glissière 25 et permet de tirer ou pousser le tube 22 dans le rail, de façon à ce qu'il reste à une même position relative, dans la direction longitudinale, par rapport à l'élément central 1 1 lors du déplacement de ce dernier. Le câble 24 est guidé dans la glissière à son extrémité avant par un patin de guidage 27. Deux autres patins de guidage dans le rail peuvent également être prévus sur le câble 24 respectivement à mi-longueur (patin 28) et au niveau de l'extrémité arrière du câble (patin 29). Ces patins empêchent le câble de sortir de la glissière 25 par la rainure 26, et permettent de réduire le frottement du câble sur le rail, et donc le bruit qui en résulte.

Le câble peut par ailleurs porter un ressort de compensation 210 logé entre le patin 28 et l'extrémité arrière du tube enrouleur 22, permettant de compenser la longueur projetée du tube 22 selon l'axe de déplacement de l'élément central 11.

Par ailleurs, le rail présentant une courbure augmentant progressivement à l'approche de l'avant du véhicule, on a avantageusement prévu un tube 22 en matériau souple, par exemple en plastique souple renforcé à l'intérieur par une armature 211 formant gaine ressort, qui épouse la courbure du rail lorsqu'il est déplacé dans la glissière 25.

### 6.3. Deuxième exemple de mode de réalisation

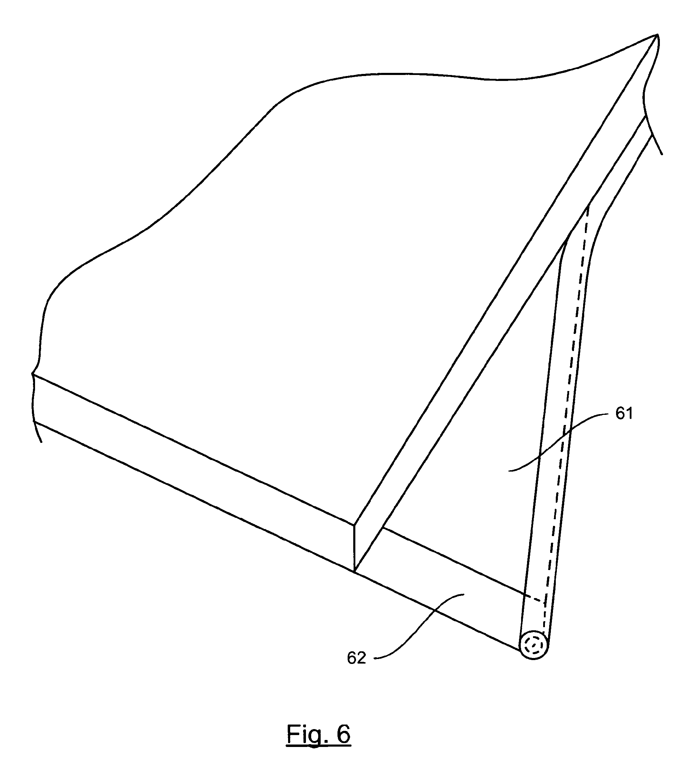

On présente, en référence aux figures 6 à 8, un autre mode de réalisation de l'invention, dans lequel l'élément latéral d'occultation est constitué d'une portion de toile de forme sensiblement triangulaire 61 à laquelle est solidarisé, par collage par exemple, une lame ressort de rappel 62.

Comme on peut le voir sur la figure 6, dans une vue en perspective, la lame ressort forme une bande qui recouvre partiellement, dans ce mode de réalisation de l'invention, la toile 61 de l'élément latéral au niveau de son extrémité la plus large. Il peut cependant être envisagé qu'il recouvre totalement la toile, dans des variantes de ce mode de réalisation de l'invention.

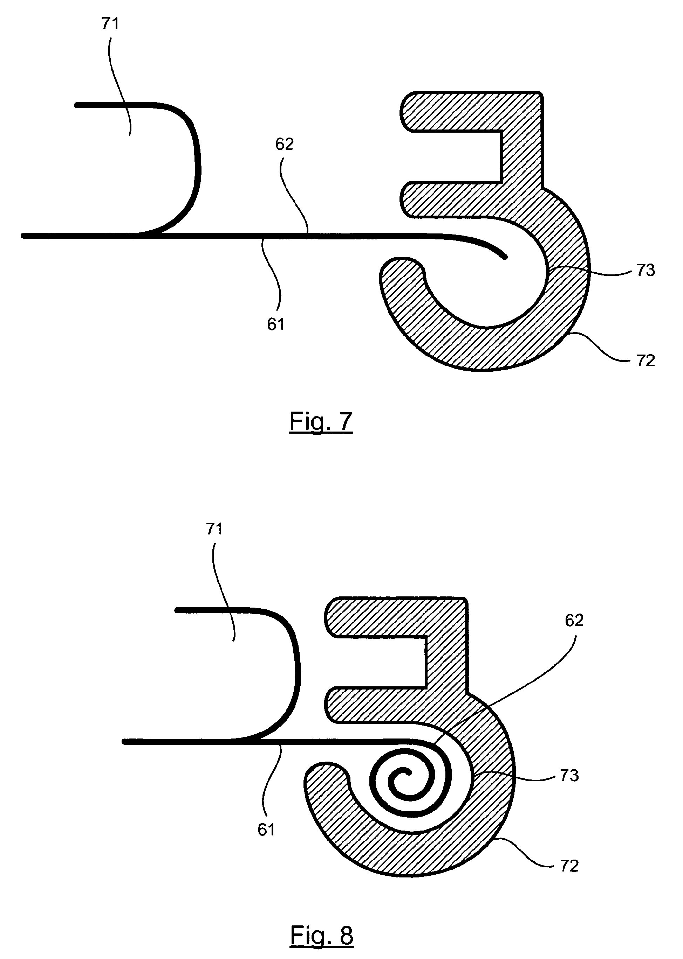

Dans la position déroulée (figure 7), la lame ressort 62, qui est représentée en coupe sur cette figure, s'étend sensiblement horizontalement entre l'élément d'occultation central, par exemple un vélum 71, et son logement 73 dans le rail 72.

Dans la position enroulée (figure 8), la lame ressort 62, sous l'effet ressort, a coopéré avec la portion de toile 61 pour la ramener dans la position enroulée, dans laquelle, la portion de toile 61 et la lame ressort sont logés dans le logement 73, enroulées l'une avec l'autre.

La lame ressort peut notamment se présenter sous une forme assimilable à un mètre à ruban, ou sous la forme d'un ressort spiral.

### 6.4. Autres caractéristiques et avantages de l'invention

Dans des variantes des modes de réalisation de l'invention décrits ci-dessus, il peut également être envisagé de prévoir :
- que l'élément d'occultation central et les éléments d'occultation latéraux sont réalisés en une seule pièce et/ou dans un même tissu ;
- que l'élément d'occultation central et les éléments d'occultation latéraux sont recouverts d'un même tissu ou film de même matière ;
- de supprimer la barre de tirage de l'élément d'occultation central, celle-ci étant supportée et maintenue tendue par la traction exercée par les élément d'occultation latéraux.

## Revendications

1. Dispositif d'occultation d'un pavillon vitré et/ou d'une partie supérieure d'un pare-brise d'un véhicule automobile, comprenant au moins un élément central d'occultation (11) mobile guidé le long de deux rails de guidage non parallèles (131, 132) entre au moins deux positions, une position repliée et une position déployée, **caractérisé en ce qu'**il comprend au moins un élément latéral d'occultation souple (15) monté entre ledit élément central et un desdits rails, susceptible d'être enroulé et monté de façon à pouvoir prendre au moins deux positions :
- une position déroulée, dans laquelle il s'étend sensiblement entre le rail et ledit élément central d'occultation, lorsque celui-ci est dans la position déployée ;
- une position enroulée, à l'intérieur ou au voisinage dudit rail, lorsque ledit élément central d'occultation est dans la position repliée.

2. Dispositif d'occultation selon la revendication 1, **caractérisé en ce que** ledit élément central d'occultation (11) est sensiblement rectangulaire, et **en ce qu'**il comprend deux éléments latéraux (15) sensiblement triangulaires.

3. Dispositif d'occultation selon l'une quelconque des revendications 1 et 2, **caractérisé en ce que** chaque élément latéral (15) est monté sur un tube enrouleur (22) souple.

4. Dispositif d'occultation selon la revendication 3, **caractérisé en ce que** ledit tube enrouleur (22) souple est guidé et/ou entraîné parallèlement à l'un desdits rails par un câble (24).

5. Dispositif d'occultation selon la revendication 4, **caractérisé en ce que** ledit câble (24) porte un ressort de compensation (210) de la longueur dudit tube selon l'axe de déplacement dudit élément central (11).

6. Dispositif d'occultation selon l'une quelconque des revendications 3 à 5, **caractérisé en ce que** ledit élément latéral souple (15) est solidarisé audit tube enrouleur (22) uniquement par son extrémité (212) la plus proche de l'avant du véhicule.

7. Dispositif d'occultation selon l'une quelconque des revendications 3 à 6, **caractérisé en ce que** ledit tube enrouleur (22) est lié en translation au rail à l'aide d'au moins deux patins (27,28).

8. Dispositif d'occultation selon l'une quelconque des revendications 3 à 7, **caractérisé en ce que** ledit rail (131, 132) comprend un logement apte à recevoir et/ou à guider ledit tube enrouleur (22).

9. Dispositif d'occultation selon l'une quelconque des revendications 1 et 2, **caractérisé en ce qu'**au moins un desdits rails (131,132) présente un logement profilé de façon à permettre l'enroulement dudit élément latéral dans ledit logement, lorsque l'on passe de la position déroulée à la position enroulée.

10. Dispositif d'occultation selon la revendication 9, **caractérisé en ce que** ledit élément latéral (15) porte ou coopère avec des moyens de rappel, tendant à le ramener dans la position enroulée.

11. Dispositif d'occultation selon la revendication 10, **caractérisé en ce que** lesdits moyens de rappel comprennent au moins une lame ressort (62) solidarisée audit élément latéral.

12. Dispositif d'occultation selon l'une quelconque des revendications 1 à 11, **caractérisé en ce que** ledit élément central (11) appartient au groupe comprenant les vélums et les toiles montées sur un tube enrouleur.

13. Dispositif d'occultation selon l'une quelconque des revendications 1 à 12, **caractérisé en ce que** le ou lesdits éléments latéraux (15) sont réalisés dans ou recouverts par un tissu similaire à celui dans lequel est réalisé ou dont est recouvert l'élément central (11).

## Claims

1. Occultation device for a glass roof and/or an upper portion of a windscreen of a motor vehicle, comprising at least one movable central occultation element (11) which is guided along two non-parallel guide rails (131, 132) between at least two positions, a folded position and an extended position,
**characterised in that** it comprises at least one flexible lateral occultation element (15) which is mounted between the central element and one of the rails and which is capable of being wound and mounted in order to be able to assume at least two positions:
- an unwound position, in which it extends substantially between the rail and the central occultation element when it is in the extended position;
- a wound position inside or in the region of the rail when the central occultation element is in the folded position.

2. Occultation device according to claim 1, **characterised in that** the central occultation element (11) is substantially rectangular, and **in that** it comprises two substantially triangular lateral elements (15).

3. Occultation device according to either claim 1 or claim 2, **characterised in that** each lateral element (15) is mounted on a flexible winding tube (22).

4. Occultation device according to claim 3, **characterised in that** the flexible winding tube (22) is guided and/or driven in a direction that is parallel to one of the rails by a cable (24).

5. Occultation device according to claim 4, **characterised in that** the cable (24) carries a spring (210) for compensating for the length of the tube along the movement axis of the central element (11).

6. Occultation device according to any one of claims 3 to 5, **characterised in that** the flexible lateral element (15) is fixedly joined to the winding tube (22) only via the end (212) thereof closest to the front of the vehicle.

7. Occultation device according to any one of claims 3 to 6, **characterised in that** the winding tube (22) is connected in terms of translation to the rail using at least two runners (27, 28).

8. Occultation device according to any one of claims 3 to 7, **characterised in that** the rail (131, 132) comprises a housing which is capable of receiving and/or guiding the winding tube (22).

9. Occultation device according to either claim 1 or claim 2, **characterised in that** at least one of the rails (131, 132) has a profiled housing in order to allow the lateral element to be wound in the housing, when moving from the unwound position to the wound position.

10. Occultation device according to claim 9, **characterised in that** the lateral element (15) carries or co-operates with return means, which tend to move it into the wound position.

11. Occultation device according to claim 10, **characterised in that** the return means comprise at least one spring leaf (62) which is fixedly joined to the lateral element.

12. Occultation device according to any one of claims 1 to 11, **characterised in that** the central element (11) belongs to the group comprising sunshades and webs which are mounted on a winding tube.

13. Occultation device according to any one of claims 1 to 12, **characterised in that** the lateral element(s) (15) is/are produced from or covered with a fabric similar to that from which the central element (11) is produced or with which it is covered.

## Patentansprüche

1. Abdeckungsvorrichtung für ein Glasdach und/oder einen oberen Bereich der Windschutzscheibe eines Kraftfahrzeuges, umfassend mindestens ein bewegliches zentrales Abdeckungselement (11), das entlang zweier nicht paralleler Schienen (131, 132) zwischen zwei Positionen geführt ist, einer eingefahrenen Stellung und einer ausgefahrenen Stellung, **dadurch gekennzeichnet, dass** sie mindestens ein seitliches weiches Abdeckungselement (15) umfasst, das zwischen dem zentralen Abdeckungselement und einer der Schienen einrollbar angeordnet und so montiert ist, daß es zumindest zwei Stellungen einnehmen kann :
• eine ausgerollte Stellung, in der es sich im Wesentlichen zwischen der Schiene und dem zentralen Abdeckungselement erstreckt, wenn dieses in der ausgefahrenen Stellung ist ;
• eine eingerollte Stellung im Innern oder in der Nähe der Schiene, wenn das zentrale Abdeckungselement in der eingefahrenen Stellung ist.

2. Abdeckungsvorrichtung gemäß Anspruch 1, **dadurch gekennzeichnet, dass** das zentrale Abdeckungselement (11) im Wesentlichen rechteckig ist und dass es zwei Seitenelemente (15) aufweist, die im Wesentlichen dreieckig sind.

3. Abdeckungsvorrichtung gemäß einem der Ansprüche 1 bis 2, **dadurch gekennzeichnet, dass** jedes Seitenelement (15) auf einer weichen Aufwickelwelle (22) angebracht ist.

4. Abdeckungsvorrichtung gemäß Anspruch 3, **dadurch gekennzeichnet, dass** die weiche Aufwickelwelle (22) mittels eines Kabels (24) parallel zu einer der Schienen geführt und/oder angetrieben ist.

5. Abdeckungsvorrichtung gemäß Anspruch 4, **dadurch gekennzeichnet, dass** das Kabel (24) eine Ausgleichsfeder (210) von der Länge der Aufwickelwelle in der Bewegungsrichtung des zentralen Abdeckungselementes (11) trägt.

6. Abdeckungsvorrichtung gemäß einem der Ansprüche 3 bis 5, **dadurch gekennzeichnet, dass** das weiche Seitenelement (15) mit der Aufwickelwelle (22) nur über sein der Fahrzeugvorderseite zugewandten Ende (212) verbunden ist.

7. Abdeckungsvorrichtung gemäß einem der Ansprüche 3 bis 6, **dadurch gekennzeichnet, dass** die Aufwickelwelle (22) ber mindestens zwei Gleitelemente (27, 28) translatorisch mit der Schiene verbunden ist.

8. Abdeckungsvorrichtung gemäß einem der Ansprüche 3 bis 7, **dadurch gekennzeichnet, dass** die Schiene (131, 132) ein Lager aufweist, das die Aufwickelwelle (22) aufnehmen und/oder führen kann.

9. Abdeckungsvorrichtung gemäß einem der Ansprüche 1 bis 2, **dadurch gekennzeichnet, dass** mindestens eine der Schienen (131, 132) ein profiliertes Lager aufweist, um das Aufrollen des Seitenelementes in dem Lager zu ermöglichen, wenn von der ausgerollten in die eingerollte Stellung übergegangen wird.

10. Abdeckungsvorrichtung gemäß Anspruch 9, **dadurch gekennzeichnet, dass** das Seitenelement (15) Rückführmittel aufweist oder mit Rückführmitteln zusammenwirkt, die dahin tendieren, es in die eingerollte Stellung zurückführen.

11. Abdeckungsvorrichtung gemäß Anspruch 10, **dadurch gekennzeichnet, dass** die Rückführmittel mindestens eine Federklinge (62) aufweisen, die mit dem Seitenelement verbunden ist.

12. Abdeckungsvorrichtung gemäß einem der Ansprüche 1 bis 11, **dadurch gekennzeichnet, dass** das zentrale Abdeckungselement (11) zu der Gruppe umfassend Zelthäute und Tücher, die auf einer Aufwickelwelle angebracht sind, gehört.

13. Abdeckungsvorrichtung gemäß einem der Ansprüche 1 bis 12, **dadurch gekennzeichnet, dass** das oder die Seitenelemente (15) aus einem Stoff bestehen oder mit einem Stoff bedeckt sind, der dem Stoff ähnlich ist, aus dem das zentrale Abdeckungselement (11) besteht oder mit dem es bedeckt ist.
